**Europäisches Patentamt**

**European Patent Office**

**Office européen des brevets**

(19)

(11) Veröffentlichungsnummer: **0 022 247**

**A1**

(12) EUROPÄISCHE PATENTANMELDUNG

(21) Anmeldenummer: **80103778.9**

(22) Anmeldetag: **03.07.80**

(51) Int. Cl.³: **F 16 B 12/38**

(30) Priorität: 04.07.79 DE 2926976
18.09.79 DE 2937630

(43) Veröffentlichungstag der Anmeldung:
14.01.81 Patentblatt 81/2

(84) Benannte Vertragsstaaten:
AT BE CH FR GB IT LI NL SE

(71) Anmelder: Schaefer, Rudolf
Brauerstrasse 35
D-4100 Duisburg 1(DE)

(72) Erfinder: Schaefer, Rudolf
Brauerstrasse 35
D-4100 Duisburg 1(DE)

(74) Vertreter: Dipl.-Ing. W. Cohausz Dipl.-Ing. R. Knauf
Dipl.-Ing. H.B. Cohausz
Dipl.-Ing. D.H. Werner Patentanwälte Schumannstrasse
97
D-4000 Düsseldorf(DE)

(54) Aus einzelnen Elementen zusammensetzbarer Körper.

(57) Die Erfindung betrifft einen Körper, insbesondere Hohlkörper, der aus einzelnen Elementen zusammengesetzt ist. Im Bereich der Verbindungsflächen sind Nut-Feder-Verbindungen ausgebildet, deren Federn Flanken aufweisen, die sich jeweils mit zunehmendem Abstand vom Federfuß einander nähern und deren Nuten entsprechend den Federn ausgeführt sind. Dabei weisen die Flanken (7) der Federn (3) und/oder Nuten (4) Ausnehmungen (8,18) auf, in denen Vorsprünge (9,17) der Nuten (4) und/ oder Federn (3) einrasten.

Fig.1

EP 0 022 247 A1

Croydon Printing Company Ltd.

_–1–_

Rudolf Schaefer

Brauerstr. 35

4100 Duisburg 1

Aus einzelnen Elementen zusammensetzbarer Körper

Die Erfindung betrifft einen aus einzelnen Elementen zusammensetzbarer Körper, insbesondere Hohlkörper, mit im Bereich der Verbindungsflächen ausgebildeten Nut-Feder-Verbindungen, deren Federn Flanken aufweisen, die sich jeweils mit zunehmendem Abstand vom Federfuß einander nähern, und deren Nuten entsprechend den Federn ausgeführt sind.

Ein derartiger Körper ist aus der europäischen Offenlegungsschrift 1 836 bekannt. Dieser bekannte Körper wird aus Elementen zusammengesetzt, deren Halt aneinander durch Spannbänder erreicht wird, die außen am Körper anliegen. Diese Spannbänder sind optisch unschön und müssen deshalb häufig unter Abdeckstreifen verborgen werden. Dies ist nicht nur aufwendig sondern auch, wie beispielsweise im Möbelbau, oft nicht durchführbar.

Aufgabe der Erfindung ist es, einen aus Elementen

33 246       – 6 –
HC/Schu

-2-

zusammensetzbaren Körper der eingangs genannten Art
derart zu verbessern, daß die Elemente ohne zusätzliche Halte- und Hilfsvorrichtungen außerhalb der
Verbindungsstellen aneinander halten.

Diese Aufgabe wird erfindungsgemäß dadurch gelöst,
daß die Flanken der Federn und/oder Nuten Ausnehmungen aufweisen, in denen Vorsprünge der Nuten und/
oder Federn einrasten.

Durch eine solche Ausführung halten die Federn in
den Nuten ohne zusätzliche Mittel außerhalb der Verbindungsstellen. Hierdurch wird ohne Klebstoff,
Spannbänder oder andere Haltemittel ein sicherer
Halt der Elemente aneinander geschaffen, wobei der
Körper außen wie innen keine Unebenheiten oder unschöne
Stellen zeigt. Bei geringem konstruktivem Aufwand und
preiswerter Herstellung sind die Elemente schnell und
leicht aneinander befestigbar, so daß auch von Laien
ein Zusammenbau durchgeführt werden kann. Fehlmontagen
sind ausgeschlossen.
In vielen Fällen, wie z.B. bei Möbeln, ist es oft
wünschenswert, wenn der Körper nach einem Zusammensetzen wieder auseinandergenommen werden kann. Deshalb wird vorgeschlagen, daß zur Bildung eines Form-
Grenzkraftgesperres der Vorsprung in der Ausnehmung
lösbar einliegt. Während hierdurch eine besonders
leichte Auseinandernehmbarkeit gewährleistet ist,
wird in vielen Fällen gefordert, daß die Elemente
besonders fest aneinander sitzen, wobei ein späteres
Lösen nicht unbedingt erforderlich ist. Deshalb wird vorgeschlagen, daß zur Bildung eines Form-Festgesperres der Vorsprung in der Ausnehmung unlösbar einliegt. Diese Verbindung ist besonders haltbar und läßt sich nur dann lösen, wenn Nut und Feder zueinander parallel verschoben werden.

Eine Übertragbarkeit hoher Kräfte und ein sicheres Aneinanderhaften ist dann gewährleistet, wenn Vorsprung und Ausnehmung einander entsprechend geformt sind. Dies wird auch dadurch erreicht und/oder verbessert, wenn Feder und Nut jeweils auf beiden Flanken bzw. Seitenflächen je einen Vorsprung bzw. eine Ausnehmung aufweisen. Ferner wird hierzu vorgeschlagen, daß die Vorsprünge und Ausnehmungen sich über die gesamte Länge der Federn und Nuten erstrecken.

Eine lösbare Verbindung bei einfacher Konstruktion wird dadurch geschaffen, wenn Vorsprünge und Ausnehmungen einen kreisabschnittförmigen Querschnitt aufweisen. Eine unlösbare Verbindung wird dagegen dadurch geschaffen, daß Vorsprünge und Ausnehmungen einen zahnförmigen Querschnitt aufweisen. Dabei kann der Querschnitt sägezahnförmig sein und die steilere Flanke dem Nutengrund zugewandt sein.

Eine hohe Beweglichkeit der Elemente zueinander bei ausreichender Dichtigkeit wird dadurch erreicht, daß im zusammengesetzten Zustand zwischen Nut und Feder mindestens ein Hohlraum besteht, der mit einer erhärtbaren und/oder dauerelastischen Masse füllbar oder in den mindestens ein elastisches Band einbringbar ist. Dabei kann im Boden jeder Nut ein elastisches Band einliegen, an das der Rücken der Feder zur Anlage
gelangt.

Ferner wird vorgeschlagen, daß Nut und/oder Feder
von Profilen gebildet sind, die an den Elementen ein-
oder ansetzbar sind. Hierdurch wird eine hohe Fertigungsgenauigkeit der Verbindungsstelle als auch eine
konstruktive Vereinfachung der Elemente erreicht, da
diese selber keine exakt ausgeführten Nuten und Federn
aufweisen müssen, die der entsprechenden Nut oder
Feder des anderen Elementes angepaßt sind.

Die Profile lassen sich besonders leicht durch Nut
und Feder in den Seitenflächen oder Stirnseiten der
Elemente befestigen und können aus elastischem Material, insbesondere Kunststoff, bestehen, wodurch sie
leicht herstellbar sind und eine hohe Dichtigkeit
erreichen können.

Durchgehende Nut- und Federverbindungen auch in den
Eckbereichen werden dadurch erreicht, daß im Bereich
der Ecken der Elemente die Feder einer Seitenfläche
in eine Nut einer Schmalseite oder Stirnfläche und
eine Nut einer Seitenfläche in eine Feder einer Schmalseite oder Stirnfläche übergeht. Hierdurch werden Herstellungskosten, Dichtigkeit und Stabilität verbessert.
Nach dem Zusammensetzen der Elemente verlaufen die Nuten
und Federn an mehreren aneinanderliegenden Stirnseiten
ohne Wechsel durchgehend. Dabei wird zur Konstruktionsvereinfachung und leichterem Zusammensetzen vorgeschlagen,
daß diese Übergänge in einem Winkel von 45 $^{\circ}$ zu den
Nuten und Federn verlaufen.

Für eine besonders sichere Kraftübertragung und eine hohe
Dichtigkeit wird vorgeschlagen, daß die Nuten und Federn
so bemessen sind, daß die von einem Spannorgan ausgeübte
Kraft im wesentlichen zwischen den Flanken der Nuten und
Federn übertragen wird.

-5-

Eine konstruktiv besonders einfache, leicht zu handhabende und selbstzentrierende Befestigung wird dadurch erreicht, daß insbesondere bei Fenstern oder Türen Befestigungspunkte mit wannenförmigen Vertiefungen von trapezförmigem Querschnitt vorgesehen sind, in denen entsprechend geformte Erhebungen zur Einlage gelangen, wobei die Seitenflächen der Trapezseiten in Längsrichtung des trapezförmigen Profils wulstförmige Erhebungen aufweisen, die in entsprechend geformte Nuten der zur Anlage gelangenden Trapezseite einrasten.

Ausführungsbeispiele der Erfindung sind in der Zeichnung dargestellt und werden im folgenden näher beschrieben. Es zeigen:

Fig. 1          einen Schnitt durch drei aneinander ange-
                setzte Wandelemente eines Körpers mit angesetzten Profilen;

Fig. 2          Querschnitte durch alternative Profilformen;

Fig. 3          zwei Schnitte ähnlich Fig. 1 mit voneinander
                lösbaren (oben) und unlösbaren (unten)
                Profilen.

Fig. 4          eine isometrische Darstellung von vier
                Wandelementen und

Fig. 5 u.6      Befestigungsteile im Längs- und Querschnitt;

Fig. 7          eine perspektivisch stark vergrößerte Dar-
                stellung der Befestigungsteile im auseinander-
                genommenen Zustand.

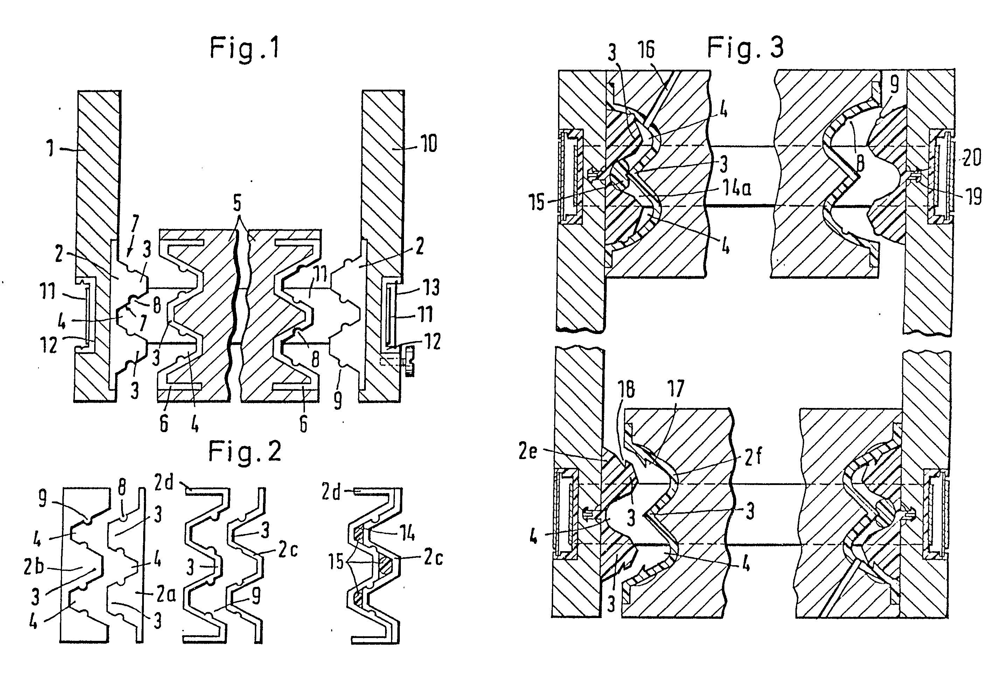

Der in Figur 1 gezeigte Körper weist ein Wandelement 1
auf, an dessen Innenfläche entlang einer Seitenkante
ein Profil 2 befestigt ist, das zwei im Querschnitt
trapezförmige Federn 3 und zwischen den Federn eine
im Querschnitt trapezförmige Nut 4 aufweist. Federn 3
und Nut 4 weisen die gleiche Querschnittsform und
-größe auf. Das Profil 2 ist mit seiner über die Federn
4 hinausreichenden Grundseite in die Fläche des Wandelementes so tief eingelassen, daß die Stärke der
Grundseite und der Nutengrund mit der Innenfläche des
Wandelementes 1 bündig ist.

Ein mit seiner Stirnseite an dem Profil 2 und damit
am Wandelement 1 befestigbares zweites Wandelement 5
größerer Stärke als die des Wandelements 1 weist an
einer Stirn- oder Schmalseite ein Profil 6 auf, das

**-7-**

im Gegensatz zum Vollprofil 2 aus Bandmaterial besteht
und vollständig bündig in die Stirnseite eingesetzt
ist, wobei hierzu in der Stirnseite zuvor Ausnehmungen
eingefräst wurden. Das Profil 6 weist zwei trapezförmige
Nuten 4 auf, die in Form und Größe den Federn 3 des
Profils 2 entsprechen, wobei die Nuten 4 des Profils
6 zwischen sich eine Feder 3 bilden, die in die Nut 4
des Profils 2 paßt.

In den Flanken 7 der Federn 3 und der Nut 4 des Profils 2 sind Längsausnehmungen 8 mit kreisabschnittförmigem Querschnitt angeordnet, in denen entsprechend
geformte Vorsprünge 9 an den Flanken der Nuten und der
Feder des Profils 6 beim Zusammensetzen einrasten. In
gleicher Weise ist auf der gegenüberliegenden Stirnseite des Wandelements 5 ein zum Wandelement 1 drittes
Wandelement 10 einrastend befestigt. Die für das
Einrasten erforderliche Kraft und die Haltekraft
hängen von Größe und Art der Ausnehmungen 8 und Vorsprünge 9 als auch von dem Material der Profile 2
und 6 ab. Eine ausreichende Elastizität wird von
Kunststoffprofilen erreicht.

Zusätzlich zu der einrastenden Halterung der Profile
aneinander kann in Höhe des Wandelements 5 um den
Körper ringsum an den Außenseiten ein Spannband 11,
Gurt oder Trosse, insbesondere aus Stahl, anliegen,
das die Wandelemente gegeneinanderdrückt und in Außennuten einliegt, die von in den Wandelementen eingelassenen U-förmigen Profilstreifen 12 gebildet werden.
Diese Profilstreifen können nach außen hin durch Abdeckstreifen 13 geschlossen werden.

Wie in Figur 2 gezeigt, können auch beide aneinander
befestigbare Profile 2a, 2b als Vollprofile ausgebildet sein oder aber aus Bandmaterial bestehen, siehe
Profile 2c und 2d in Fig. 2. Im zusammengesetzten
Zustand bilden die Profile 2c und 2d zwischen dem
Nutengrund und dem Profilrücken Längshohlräume 14, in
die elastische Bänder 15, insbesondere aus Kunststoff,
einlegbar sind. Die Elastizität dieser Bänder 15 oder
Schnüre ist erheblich höher als die der Profile.

Bei den in der Figur 3 gezeigten Ausführungsbeispielen
weisen die Nuten und Federn in etwa halbkreisförmige
Querschnitte auf, und ein Hohlraum 14a zwischen den
Profilen 2a, 2b erstreckt sich über den größten Teil
der Profilbreiten, so daß die Profile aneinander nur
noch mit zwei äußeren Seitenflanken anliegen. Dieser
Zwischenraum erlaubt eine begrenzte Bewegung der Wandelemente zueinander und kann ein elastisches Band 15
oder eine Schnur enthalten oder aber alternativ mit
einer erhärtbaren und/oder dauerelastischen Kunststoffmasse oder -schaum ausgefüllt werden. Diese wird durch
einen Kanal eingebracht, der von einer Bohrung 16 gebildet wird.

Da bei den in Fig. 3 gezeigten Ausführungsbeispielen
die Profile nur mit ihren äußeren Flanken aneinander
anliegen, sind nur in diesen äußeren Bereichen Vorsprünge und Ausnehmungen vorgesehen. In dem in Fig. 3
gezeigten oberen Ausführungsbeispiel sind die Ausnehmungen 8 und Vorsprünge 9 im Querschnitt kreisabschnittförmig, während sie im unteren Ausführungsbeispiel
sägezahnförmig sind, wobei die steilere Flanke des
Sägezahns dem Nutengrund zugewandt ist. Durch eine
sägezahnförmige Ausführung wird eine Verbindung erreicht,

- 9 -

die in einer Richtung entgegengesetzt zur Zusammensetzrichtung bei ausreichend festem oder hartem Profilmaterial nicht lösbar ist, ohne Zahn 17 oder Ausnehmung 18 zu zerstören. Dagegen lassen sich die Profile durch ein axiales Längsverschieben wieder lösen.

Während die Profile 2 und 6 an den Wandelementen angeklebt oder angeschraubt sind, sind die in Fig. 3 gezeigten Profile 2e und 2f zusätzlich oder alternativ
durch Nut 19 und Feder 20 an den Wandelementen befestigt.

Sollte jedoch auf die Dichtigkeit verzichtet werden,
z.B. beim Möbelbau, ist es auch möglich, an den Seitenelementen nur kurze Profilstreifen anzubringen, die
auch nur in der Höhe und Tiefe eines Seitenelementes
verlaufen brauchen, und dennoch eine hohe Formstabilität aufweisen.

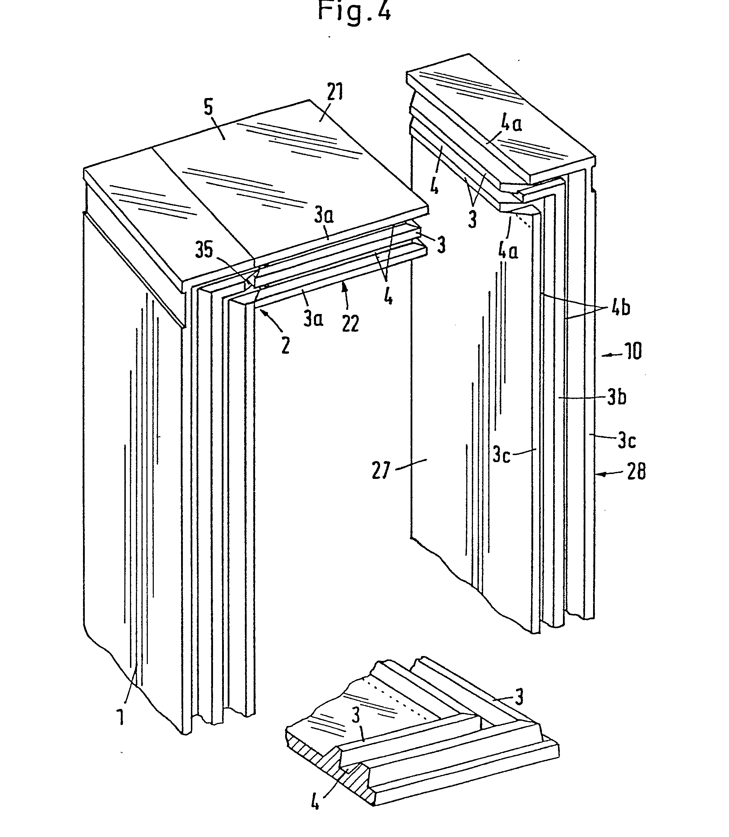

Es ist aber auch möglich, in allen Eckbereichen entsprechende Formstücke (Nut-Feder-Winkel) mit einem Federsprung nach Fig.4 anzusetzen. Der Federsprung wird im
folgenden näher anhand der Fig. 4 erläutert.

Von den beiden in Fig.4 dargestellten Wandelementen hat
das Wandelement 5 zwei Seitenflächen 21 und 22. Entlang
der einen Schmalseite verlaufen zwei Nuten 4, zwischen
denen sich eine Feder 3 erstreckt. Zu den Seitenflächen
21 und 22 hin schließen sich zwei Halbfedern 3a an, die
jeweils an den Außenseiten in eine der Seitenflächen 21
bzs. 22 übergehen und die jweils etwa den halben Querschnitt der Feder 3 haben. In der gleichen Ausbildung
und Anordnung verlaufen Nuten und Federn sowie die Halbfedern auch auf der in diesem Eckbereich angrenzenden
Schmalseite.

Das andere Wandelement 1o hat ebenfalls zwei Seitenflächen 27 und 28. Entlang der einen Längskante des Wandelementes 1o sind im Randbereich der Seitenfläche 27 zwei Federn 3 ausgebildet, zwischen denen sich eine Nut 4 erstreckt. Zur Außenseite der beiden Federn 3 hin sind Halbnuten 4a ausgebildet, die ihrerseits jeweils etwa den halben Querschnitt der Nut 4 haben und in ihrer Anordnung und Bemessung auf die Halbfedern 3a abgestimmt sind. Die untere Halbnut 4a besteht hierbei eigentlich nur aus einem Freiraum.

Die nach oben weisende Schmalseite des Wandelementes 1o geht nach dem Zusammensetzen der Wandelemente 5 und 1o in die Seitenfläche 21 des Wandelementes über.

An der nach vorne weisenden Schmalseite hat das Wandelement 1o zwei Nuten 4b, zwischen denen eine Feder 3b verläuft. Zu den Seitenflächen 27 und 28 hin schließt jeweils wiederum eine Halbfeder 3c an.

Im Eckbereich geht die linke Halbfeder 3c in die praktisch nur theoretisch vorhandene Halbnut 4a über, während die Feder 3b in ihrem oberen, etwa waagerecht verlaufenden Teil am Ende schäg abgeschnitten ist, so daß der Rücken der Feder 3b mit dem Boden der Nut 4 etwa rechtwinklig aneinanderstößt. Dasselbe gilt für das Aneinanderstoßen der Rücken der Federn 3 mit den Böden der Nuten 4b. Diese Übergänge verlaufen alle in Form einer Abschrägung unter einem Winkel von 45°.

Ebenso geht der Boden der oberen Halbnut 4a in einem rechten Winkel in den Rücken der Halbfeder 3c über.

— 11 —

Die Federn 3 und die Nuten 4 sind in ihren Abmessungen
so aufeinander abgestimmt, daß zwischen dem Rücken einer
Feder 3 und dem Boden einer Nut 4 jeweils ein Querschnittsteil 35 frei bleibt, in den eine hier nicht dargestellte
Banddichtung eingelegt werden kann.

Alle Nuten und Halbnuten, Federn und Halbfedern haben
jeweils einen angenähert trapezförmigen Querschnitt und
sind so bemessen, daß eine die Wandelemente 5 und 1o in
Verbindungsrichung zusammendrückende Kraft im wesentlichen
nur an den Nut- und Federflanken übertragen wird. Ein
nur unwesentlicher Teil dieser Kraft dient zum Zusammendrücken der in den Querschnittsteil 35 jeweils eingelegten Dichtungen.

Die Wandelemente 1 und 1o stehen auf einem Boden 23,
der auf seiner Oberseite an den Rändern zwei Federn 3
und dazwischen eine Nut 4 aufweist, die rundum umlaufen.

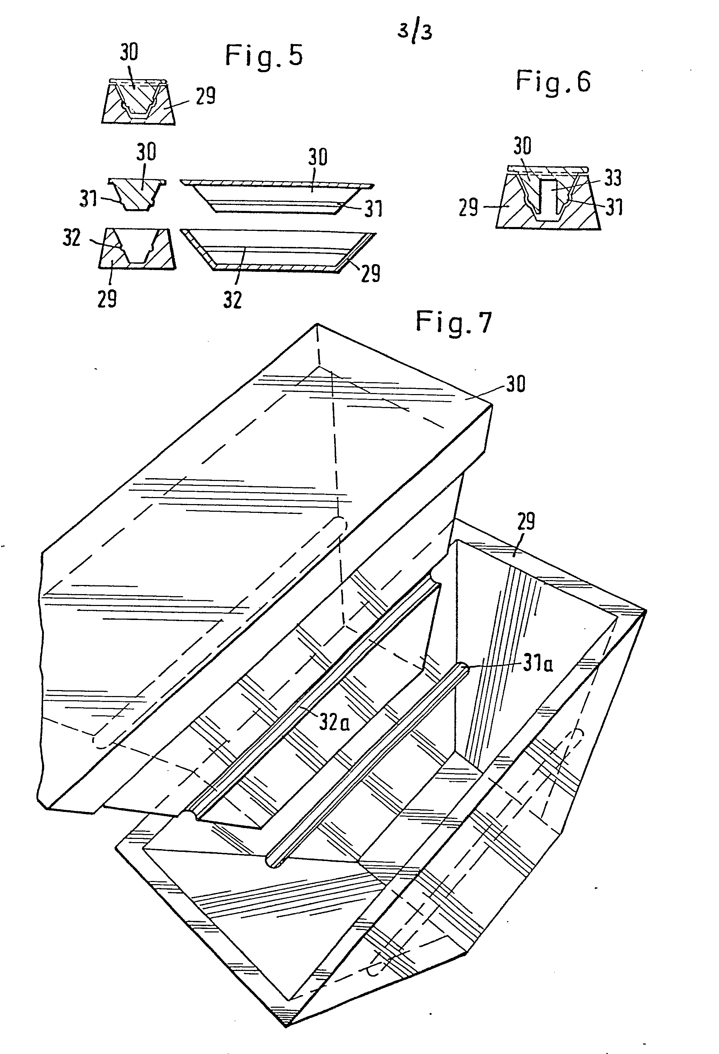

Es können zweiteilige Befestigungselemente verwendet
werden, wie sie in Fig. 5 bis 7 dargestellt sind. Diese
Befestigungselemente sind nach dem Nut-Feder-Prinzip
aufgebaut und weisen ein Aufnahmeteil 29 auf, das eine
wannenförmige Vertiefung besitzt, die sowohl im Längsschnitt als auch im Querschnitt trapezförmig ist, wobei
sich die Innenwände nach innen hin einander nähern. In
dieses Aufnahmeteil wird ein Einsetzteil 3o selbstzentrierend eingedrückt, das entsprechend der Vertiefung
des Aufnahmeteils 29 geformt ist und diese Vertiefung
vollständig ausfüllt. An den Längsseiten bzw. Flanken
des Einsetzteils 3o sind in Längsrichtung wulstförmige
Erhebungen 31 angeformt, die in Längsnuten 32 des Aufnahmeteils 29 einrasten. Aufnahmeteil 29 und Einsetzteil 3o
werden jeweils mit ihrer Grund-Oberseite in oder an

- 12 -

einem Rahmen und einer Abdeckfläche oder Leiste befestigt,
so daß diese Teile lösbar aneinander befestigbau sind.
In dem in Fig. 7 gezeigten Ausführungsbeispiel sind die
quer zur Befestigungsrichtung angeordneten, teilzylindrischen Erhebungen 31a im Aufnahmeteil 29 an den Innenwandungen angeordnet und die entsprechenden Nuten 32a in
den Seitenwandungen des Einsetzteils 3o.

Im Einsetzteil 3o kann parallel zu den Erhebungen 31 ein
Längsschlitz 33 rechtwinklig zur Grundseite eingebracht
sein, der die federnde Wirkung der Erhebungen bzw. der
Seitenflächen (Flanken) des Einsetzteils erhöht, Fig. 6.

Durch diese Ausführung können als Bausatz an vorhandenen
Fensterflügeln nachträglich in Selbstbauweise Nut-Feder-
Profile und weitere Rahmen ohne handwerkliche Fertigkeiten befestigt werden.

COHAUSZ & FLORACK 0022247

PATENTANWALTSBÜRO

SCHUMANNSTR. 97 · D-4000 DÜSSELDORF
Telefon: (0211) 68 33 46          Telex: 08586513 cop d

PATENTANWÄLTE.
Dipl.-Ing W. COHAUSZ · Dipl.-Ing R. KNAUF · Dr.-Ing. Dipl.-Wirtsch.-Ing A. GERBER · Dipl.-Ing H. B. COHAUSZ

## – 13 –

### Ansprüche

1. Aus einzelnen Elementen zusammensetzbarer Körper,
   insbesondere Hohlkörper, mit im Bereich der Verbindungsflächen ausgebildeten Nut-Feder-Verbindungen,
   deren Federn Flanken aufweisen, die sich jeweils mit
   zunehmendem Abstand vom Federfuß einander nähern,
   und deren Nuten entsprechend den Federn ausgeführt
   sind, d a d u r c h   g e k e n n z e i c h n e t ,
   daß die Flanken (7) der Federn (3) und/oder Nuten
   (4) Ausnehmungen (8, 18) aufweisen, in denen Vorsprünge (9, 17) der Nuten und/oder Federn einrasten.

2. Körper nach Anspruch 1, d a d u r c h   g e k e n n –
   z e i c h n e t , daß zur Bildung eines Form-Grenzkraftgesperres der Vorsprung (9) in der Ausnehmung
   (8) lösbar einliegt.

3. Körper nach Anspruch 1, d a d u r c h   g e k e n n –
   z e i c h n e t , daß zur Bildung eines Form-Festgesperres der Vorsprung (17) in der Ausnehmung (18)
   unlösbar einliegt.

4. Körper nach einem der Ansprüche 1 bis 3, d a –

33 246 Ell
HC/ Schu

- 14 -

durch gekennzeichnet, daß
Vorsprung (9, 17) und Ausnehmung (8, 18) einander
entsprechend geformt sind.

5. Körper nach einem der Ansprüche 1 bis 4, d a -
   d u r c h   g e k e n n z e i c h n e t , daß
   Feder (3) und Nut (4) jeweils auf beiden Flanken
   bzw. Seitenflächen je einen Vorsprung (9, 17) bzw.
   eine Ausnehmung (8, 18) aufweisen.

6. Körper nach einem der Ansprüche 1 bis 5, d a -
   d u r c h   g e k e n n z e i c h n e t , daß die
   Vorsprünge (9, 17) und Ausnehmungen (8, 18) sich
   über die gesamte Länge der Federn (3) und Nuten
   (4) erstrecken.

7. Körper nach Anspruch 1, 2, 4 bis 6, d a d u r c h
   g e k e n n z e i c h n e t , daß Vorsprünge (9)
   und Ausnehmungen (8) einen kreisabschnittförmigen
   Querschnitt aufweisen.

8. Körper nach Anspruch 1 und 3 bis 7, d a d u r c h
   g e k e n n z e i c h n e t , daß Vorsprünge (9)
   und Ausnehmungen (8) einen zahnförmigen Querschnitt
   aufweisen.

9. Körper nach Anspruch 8, d a d u r c h   g e -
   k e n n z e i c h n e t , daß der Querschnitt
   sägezahnförmig ist und die steilere Flanke dem
   Nutengrund zugewandt ist.

10. Körper nach einem der Ansprüche 1 bis 9, d a - durch gekennzeichnet , daß
im zusammengesetzten Zustand zwischen Nut (4)
und Feder (3) mindestens ein Hohlraum (14, 14a)
besteht, der mit einer erhärtbaren und/oder
dauerelastischen Masse füllbar oder in den mindestens ein elastisches Band einbringbar ist.

11. Körper nach einem der Ansprüche 1 bis 10, d a -
d u r c h  g e k e n n z e i c h n e t , daß
im Boden jeder Nut ein elastisches Band einliegt,
an das der Rücken der Feder (3) zur Anlage gelangt.

12. Körper nach einem der Ansprüche 1 bis 11, d a -
d u r c h  g e k e n n z e i c h n e t , daß
Nut (4) und/oder Feder (3) von Profilen (2, 2a
bis 2f, 6) gebildet sind, die an den Elementen
(1, 5, 10) ein- oder ansetzbar sind.

13. Körper nach Anspruch 12, d a d u r c h  g e -
k e n n z e i c h n e t , daß die Profile (2e,
2f) durch Nut (19) und Feder (20) an den Elementen (1, 5, 10) befestigbar sind.

14. Körper nach Anspruch 12 oder 13, d a d u r c h
g e k e n n z e i c h n e t , daß mindestens
eines der Profile (2, 2a-2f, 6) aus elastischem
Material, insbesondere Kunststoff, besteht.

15. Körper nach einem der Ansprüche 1 bis 14, d a - durch gekennzeichnet, daß im Bereich
der Ecken der Elemente (1,5,1o) die Feder (3) einer
Seitenfläche in eine Nut (4) einer Schmalseite oder
Stirnfläche und eine Nut (4) einer Seitenfläche in eine
Feder (3) einer Schmalseite oder Stirnfläche übergeht.

16. Körper nach Anspruch 15, dadurch gekennzeichnet, daß diese Übergänge in einem Winkel von
45 Grad zu den Federn (3) und Nuten (4) verlaufen.

17. Körper nach einem der Ansprüche 1 bis 16, dadurch
gekennzeichnet, daß die Elemente (1,5,1o)
durch ein außen am Körper anliegendes Spannband (11)
aneinander gehalten werden.

18. Körper nach einem der Ansprüche 1 bis 17, dadurch
gekennzeichnet, daß die Nuten und Federn
so bemessen sind, daß die von einem Spannorgan (11) ausgeübte Kraft im wesentlichen zwischen den Flanken der
Nuten (4) und Federn (3) übertragen wird.

19. Körper nach einem der Ansprüche 1 bis 18, dadurch
gekennzeichnet, daß insbesondere bei
Fenstern oder Türen Befestigungspunkte mit wannenförmigen
Vertiefungen (29) von trapezförmigem Querschnitt vorgesehen sind, in denen entsprechend geformte Erhebungen
(3o) zur Einlage gelangen, wobei die Seitenflächen der
Trapezseiten in Längsrichtung des trapezförmigen Profils
wulstförmige Erhebungen (31) aufweisen, die in entsprechend geformte Nuten (32) der zur Anlage gelangenden
Trapezseite einrasten.

2o. Körper nach Anspruch 19, d a d u r c h   g e k e n n -
z e i c h n e t, daß die wulstförmigen Erhebungen (31a)
in der Vertiefung des Aufnahmeteils (29) und die Nuten
(32a) in den Einsetzteilen (3o) angeordnet sind.

Fig.1

Fig.2

Fig.3

# Fig.4

Fig.5

Fig.6

Fig.7

| Europäisches Patentamt | **EUROPÄISCHER RECHERCHENBERICHT** | Nummer der Anmeldung |
|---|---|---|
| | | EP 80103778.9 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| | US - A - 4 025 216 (HIVES)<br>+ Gesamt +<br>-- | 1,2,4,<br>5,6,8,<br>9,12,13,<br>14 | F 16 B 12/38 |
| | DE - A - 2 013 370 (NAHR)<br>+ Fig. 13 +<br>-- | 1,3,4,<br>5,8,10,<br>14 | |
| | DE - A - 2 313 662 (BIERLICH)<br>+ Fig. +<br>---- | 1,3,4,<br>5,6,7,<br>8,14 | |

**RECHERCHIERTE SACHGEBIETE (Int. Cl.³)**

F 16 B 12/00
E 06 B 3/00
F 16 B 2/00
F 16 B 5/00
F 16 B 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 12-09-1980 | BENCZE |

EPA form 1503.1 06.78